# EUROPÄISCHE PATENTSCHRIFT

(11) **EP 0 350 722 B1**
(45) Veröffentlichungstag und Bekanntmachung des Hinweises auf die Patenterteilung: **04.09.1996**
(21) Anmeldenummer: 89111843.2
(22) Anmeldetag: 29.06.1989
(51) Int. Cl.: G01N 21/74

(54) **Vorrichtung zur elektrothermischen Atomisierung einer Probe für spektroskopische Zwecke**
Device for the electrothermal atomisation of a sample for spectroscopical purposes
Dispositif pour l'atomisation électrothermale d'un échantillon à des fins spectroscopiques

(30) Priorität: 13.07.1988 DE 3823733
(43) Veröffentlichungstag der Anmeldung: 17.01.1990
(73) Patentinhaber: BODENSEEWERK PERKIN-ELMER GMBH, D-88662 Überlingen (DE)
(72) Erfinder: Huber, Bernhard, D-7770 Überlingen (DE); Tamm, Rolf, D-7777 Salem 2 (DE); Stengele, Erich, D-7776 Taisersdorf (DE); Rödel, Günther, D-7776 Owingen (DE)
(74) Vertreter: Grünecker, Kinkeldey, Stockmair & Schwanhäusser Anwaltssozietät

(56) Entgegenhaltungen:
- DD-A- 203 391
- FR-A- 2 222 914
- GB-A- 2 102 589
- JP-A-57 070 396
- US-A- 4 022 530
- PATENT ABSTRACTS OF JAPAN, Band 10, Nr. 177 (P-470)[2233], 21. Juni 1986; & JP- A-61 026 843 (SHIMADZU) 06-02-1986
- PATENT ABSTRACTS OF JAPAN, Band 1, Nr. 73 (943)[E-77], 14. Juli 1977; & JP-A-52 010 797 (HITACHI) 27-01-1977
- PATENT ABSTRACTS OF JAPAN, Band 4, Nr. 24 (E-173), 29. Februar 1980; & JP-A-54 162 596 (HITACHI) 24-12-1979

## Beschreibung

### Technisches Gebiet

Die Erfindung betrifft eine Vorrichtung zur elektrothermischen Atomisierung einer Probe für spektroskopische Zwecke, insbesondere für die Atomabsorptions - Spektroskopie, enthaltend
(a) einen Ofen
   - mit einem im wesentlichen rohrförmigen Ofenkörper
   - mit seitlichen Kontaktstücken mit Kontaktflächen, wobei die Kontaktstücke an dem Ofenkörper so angebracht sind, daß ein elektrischer Strom zum Aufheizen des Ofens durch den Ofen hindurchleitbar ist, und
   - mit einer den Durchtritt eines Meßlichtbündels gestattenden Bohrung in dem Ofenkörper,
(b) ein Paar von elektrischen Kontakten,
   - zwischen denen der Ofen mit seinen Kontaktflächen gehalten ist,
   - über die der besagte elektrische Strom zuführbar ist und
   - die unter Bildung eines Spaltes um den Ofen herumgreifen und einen den Ofen enthaltenden Hohlraum bilden, wobei der zwischen den Kontakten gebildete Spalt durch eine elektrisch isolierende Dichtung abgeschlossen ist,
(c) miteinander und mit der Bohrung des Ofens fluchtende Öffnungen in den Kontakten, und
(d) Mittel zur Führung eines Schutzgasstromes über Innen- und Außenfläche des Ofens.
Eine derartige Vorrichtung ist durch die japanische Patentanmeldung 52/010 797 (Patent abstract of Japan Bd. 1 No. 73 (943) (E-77), 14. Juli 1977 bekannt.

Rohrförmige Öfen zur elektrothermischen Atomisierung bei der Atomabsorptions - Spektroskopie sind als "Gräphitrohre" bekannt. Diese Graphitrohre werden mit ihren Stirnseiten zwischen ringförmigen Graphitkontakten gehalten, die federnd oder durch einen Stellmotor angedrückt werden. Die Graphitkontakte sitzen in Kühlmänteln. Eine zu atomisierende Probe wird durch eine seitliche Öffnung in das Graphitrohr eingebracht. Über die Graphitkontakte wird ein starker elektrischer Strom in Längsrichtung durch das Graphitrohr geleitet. Dadurch wird das Graphitrohr auf eine hohe Temperatur aufgeheizt. Die Probe wird dadurch atomisiert, so daß sich eine "Atomwolke" im Inneren des Graphitrohres bildet. Ein Meßlichtbündel von einer linienemittierenden Lichtquelle, das die Resonanzspektrallinien eines gesuchten Elements enthält, wird durch die ringförmigen Graphitkontakte und die Längsbohrung des Graphitrohres hindurchgeleitet. Aus der Absorption, welche das Meßlichtbündel dabei erfährt, kann die Menge des gesuchten Elements in der Probe bestimmt werden. Das Graphitrohr wird dabei von einem Schutzgas umströmt, so daß bei der Aufheizung kein Sauerstoff an das Graphitrohr gelangen kann.

Eine solche Anordnung ist beispielsweise bekannt durch die DE-AS 24 13 782 und die US-PS 4 022 530. Eine ähnliche Anordnung ist auch durch die japanische Patentanmeldung 61/026 843 (Patent abstract of Japan Bd. 10, No. 177 (P-470) (2233), 21. Juni 1986 bekannt.

Bei der Kontaktanordnung nach der DE-AS 24 13 782 sind die Kontakte rohrförmig ausgebildet. Die beiden Kontakte umgeben das Graphitrohr bis auf eine Trennfuge mantelförmig auf seiner gesamten Länge zwischen den Kontaktflächen. Das hat den Vorteil, daß das Graphitrohr von den Kontakten eng umgeben ist. Das Graphitrohr "sieht" auf seiner Außenseite die noch relativ heißen Kontakte und nicht die unmittelbar von einem durchströmenden Kühlmittel durchflossenen Gehäuseteile (Kühlmäntel), in denen die Kontakte ihrerseits gehaltert sind.

Ein Schutzgasstrom wird von beiden Enden her in das Graphitrohr eingeleitet. Dieser Schutzgasstrom tritt durch eine radiale Bohrung des Graphitrohres in der Mitte aus. Einer der rohrförmigen Kontakte weist ebenfalls eine radiale Bohrung auf, die mit der radialen Bohrung (Probeneingabeöffnung) des Graphitrohres fluchtet.

Die Kontakte der Kontaktanordnung bilden dabei einen Hohlraum, in welchem das Graphitrohr gehalten wird. In diesen Hohlraum wird Schutzgas eingeleitet, welches das Graphitrohr umspült. Dabei werden zwei Schutzgasströme erzeugt, von denen einer durch das Innere des Graphitrohres fließt, üblicherweise von den Enden des Graphitrohres einwärts und durch die zentrale seitliche öffnung (Probeneingabeöffnung) hinaus, und von denen der andere das Graphitrohr auf der Außenseite umspült. Ein Teil des letzteren Schutzgasstromes tritt durch den Spalt aus, der zwischen den beiden elektrisch gegeneinander zu isolierenden Elektroden notwendigerweise gebildet wird. Hierdurch wird ein Eindringen von Luftsauerstoff durch den Spalt in den Hohlraum und zu dem Graphitrohr verhindert. Dieser Spalt bedingt einen ziemlich hohen Verbrauch an Schutzgas. Es treten außerdem Strömungen auf, durch welche thermische Zersetzungsprodukte der Probe über Zonen relativ niedriger Temperatur geführt werden.

Durch die DE-OS 35 34 417 und die Veröffentlichung in "Analytical Chemistry" 58 (1986),1973 ist ein Ofen für die thermoelektrische Atomisierung bei der Atomabsorptions - Spektroskopie bekannt, bei welchem ein rohrartiger Ofenkörper von rechteckigem Querschnitt mit quer zur Ofenachse sich erstreckenden Kontaktansätzen als integraler Bauteil aus Graphit hergestellt ist. Strom zum Aufheizen des Ofens wird dabei über die Kontaktansätze quer zur Längsachse des rohrartigen Ofenkörpers zugeführt.

Es sind Atomisierungseinrichtungen zur elektrothermischen Atomisierung von Proben mittels eines rohrförmigen, zwischen ringförmigen Kontakten aus Graphit gehaltenen Graphitofens (Graphitrohres) bekannt, bei denen die Kontakte in einer Gehäusestruktur gehalten sind. Die Gehäusestruktur wird durch Kühlkanäle gekühlt. Diese Gehäusestruktur umschließt den Graphitofen und bildet einen Hohlraum. Die Gehäusestruktur besteht aus zwei voneinander elektrisch isolierten Teilen, über welche jeweils die Stromzufuhr zu den Kontakten erfolgt. Dieser Hohlraum wird durch eine elektrisch isolierende Dichtung zur Atmosphäre hin abgeschlossen. Bei diesen Atomisierungseinrichtungen wird der Graphitofen -im Gegensatz zu der Anordnung nach der DE-B-24 13 782- nicht von den an dem Graphitofen unmittelbar anliegenden Kontakten sondern von gekühlten Teilen des Gehäuses umschlossen. Zwischen diesen gekühlten Teilen sitzen die Dichtungen.

Beispiele für solche Konstruktionen sind die DD-A-203 391, die DE-A-25 11 666, die DE-A1-32 28 245 und die GB-A2 102 589. Bei solchen Atomisierungseinrichtungen ergibt sich zwar der Vorteil, daß die Dichtung zwischen gekühlten Gehäuseteilen in ziemlich großem Abstand von dem glühenden und strahlenden Graphitofen erfolgt. Dadurch ist die Dichtung nur geringen thermischen Belastungen ausgesetzt. Zwischen der Probeneingabeöffnung des Graphitofens, aus welcher der Atomdampf nach der Messung abzieht und der Dichtung liegt ein nicht von Schutzgas durchströmter Raum, der von kühlen Gehäuseteilen begrenzt ist. In diesen Raum diffundieren Zersetzungsprodukte und schlagen sich an den unmittelbar gekühlten Wandungen nieder. Solche niedergeschlagenen Zersetzungsprodukte können zu Verschleppung führen, was durch die Ausbildung nach der DE-A-24 13 782 vermieden werden soll. Außerdem "sieht" die Außenwandung des Graphitofens die gekühlten Wandungsteile. Das führt zu unerwünscht starker Abstrahlung von dem Graphitofen.

Zu erwähnen ist noch, daß es aus der japanischen Patentanmeldung 54/162 596 (Patent abstract of Japan No. 24 (E-173), 29. Februar 1980 bekannt ist, bei einer heißen Vorrichtung, nämlich einem Wärmetauscher, Dichtungen aus Keramikfilz zu verwenden.

### Offenbarung der Erfindung

Der Erfindung liegt die Aufgabe zugrunde, eine Vorrichtung zur elektrothermischen Atomisierung einer Probe für spektroskopische Zwecke, insbesondere für die Atomabsorptions-Spektroskopie, gemäß dem Stand der Technik zu verbessern.

Erfindungsgemäß wird diese Aufgabe dadurch gelöst, daß
(e) fluchtende Probeeingabeöffnungen in dem Ofen und in einem der Kontakte zum Eingeben von Probe in die Bohrung des Ofens vorgesehen sind,
(f) die Öffnungen durch Fenster abgeschlossen sind, welche einen Durchtritt des Meßlichtbündels gestatten,
(g) der Strom zur Aufheizung des Ofens im wesentlichen quer zur Achse der vom Meßlichtbündel durchsetzten Bohrung durch den Ofen hindurchleitbar ist,
(h) die Stirnflächen des rohrförmigen Ofenkörpers mit der Innenwandung des von den Kontakten gebildeten Hohlraums Spalte bilden, und
(i) die Mittel zur Führung des Schutzgasstromes Schutzgaseinlässe im Bereich der Kontaktstücke aufweisen, so daß das Schutzgas längs der Kontaktstücke, um den rohrförmigen Ofenkörper herum und durch die Spalte hindurch von den Enden her in die Bohrung des Ofenkörpers strömt, aus welcher es über die fluchtenden Probeeingabeöffnungen austritt, so daß der Zutritt von Luftsauerstoff zu dem Ofen verhindert und die Probenbestandteile abgeführt werden.

Auf diese Weise wird der Verbrauch an Schutzgas reduziert und eine Zuführung des Schutzgases erfolgt in definierter Weise.

Weiterhin wird eine Abfuhr von Zersetzungsprodukten der Probe durch das Schutzgas in definierter Weise unter Vermeidung relativ kalter Bereiche gewährleistet.

Darüber hinaus kann eine gleichmäßige Erwärmung des Ofens sichergestellt werden.

Insbesondere wird ein bis auf die Probeneingabeöffnung abgeschlossener Hohlraum gebildet, in welchem der Ofen so angeordnet ist, daß der Strom zur Aufheizung des Ofens im wesentlichen quer zur Längsachse des Ofens durch denselben hindurchgeleitet wird. Hierdurch wird eine gleichmäßige Erwärmung des Ofens sichergestellt. Aus dem abgeschlossenen Hohlraum kann das eingeleitete Schutzgas nur durch die Probeneingabeöffnung wieder austreten. Damit wird ein Gasaustritt durch einen zusätzlichen Spalt verhindert. Dies bringt eine erhebliche Einsparung an Schutzgas und verhindert Strömungen, die zu einem solchen Spalt fließen. Es hat sich gezeigt, daß eine solche Abdichtung des Spaltes zwischen den Kontakten praktisch realisierbar ist, trotz der extrem hohen Temperaturen, auf welche der Ofen im Betrieb aufgeheizt wird.

Darüber hinaus kann durch die spezielle Art der Schutzgaszuführung eine gleichmäßige Zuführung des Schutzgases und damit auch eine gleichmäßige Abführung der Zersetzungsprodukte erzielt werden. Insbesondere wird das Schutzgas von den Seiten der Kontakte her in den Hohlraum geführt. Dort wird das Schutzgas über die Außenseite des Ofens geführt und strömt durch Spalte (134, 136), die durch die Stirnflächen des rohrförmigen Ofenkörpers mit der Innenwandung des Hohlraums gebildet sind, in gleichmäßiger Weise in die Bohrung des Ofenkörpers. Schließlich gelangt das Schutzgas durch die Probenzuführöffnung aus dem Ofenbereich.

Vorteilhafterweise sind die Kontakte in einer Kühlvorrichtung gehaltert. Die Kontakte selbst, zwischen denen die Dichtung sitzt, sind daher relativ kühl verglichen mit dem Ofen selbst. Die Dichtung ist zweckmäßigerweise von den gekühlten Kontakten gegenüber dem Ofen im wesentlichen abgeschattet. Auf diese Weise wird einer unzulässigen Erwärmung der Dichtung durch die Strahlung des glühenden Ofens entgegengewirkt.

Weitere Ausgestaltungen der Erfindung sind Gegenstand der Ansprüche 4 bis 12.

Einige Ausführungsbeispiele der Erfindung sind nachstehend unter Bezugnahme auf die zugehörigen Zeichnungen näher erläutert.

### Kurze Beschreibung der Zeichnungen

- Fig.1: zeigt einen Schnitt durch eine Vorrichtung zur elektrothermischen Atomisierung einer Probe mit einem Ofen und zwei Kontakten, die einen abgeschlossenen Hohlraum für den Ofen bilden.
- Fig.2: zeigt einen Schnitt längs der Linie II - II von Fig.1.
- Fig.3: zeigt in vergrößertem Maßstab eine andere Ausführung der Dichtung bei einer Anordnung ähnlich Fig.1, bei welcher die Dichtung ein Keramikring an dem in Fig.1 linken Kontakt ist.
- Fig.4: zeigt in vergrößertem Maßstab eine weitere Abwandlung der Dichtung bei einer Anordnung ähnlich Fig.1, bei welcher die Dichtung ein Keramikring an dem in Fig.1 rechten Kontakt ist.

### Bevorzugte Ausführung der Erfindung

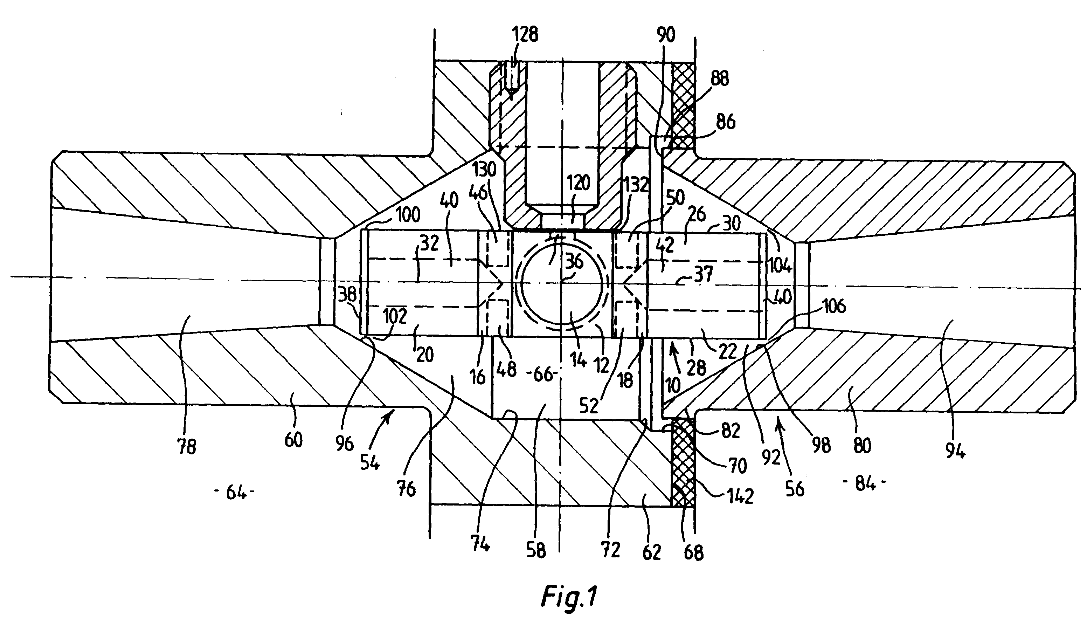

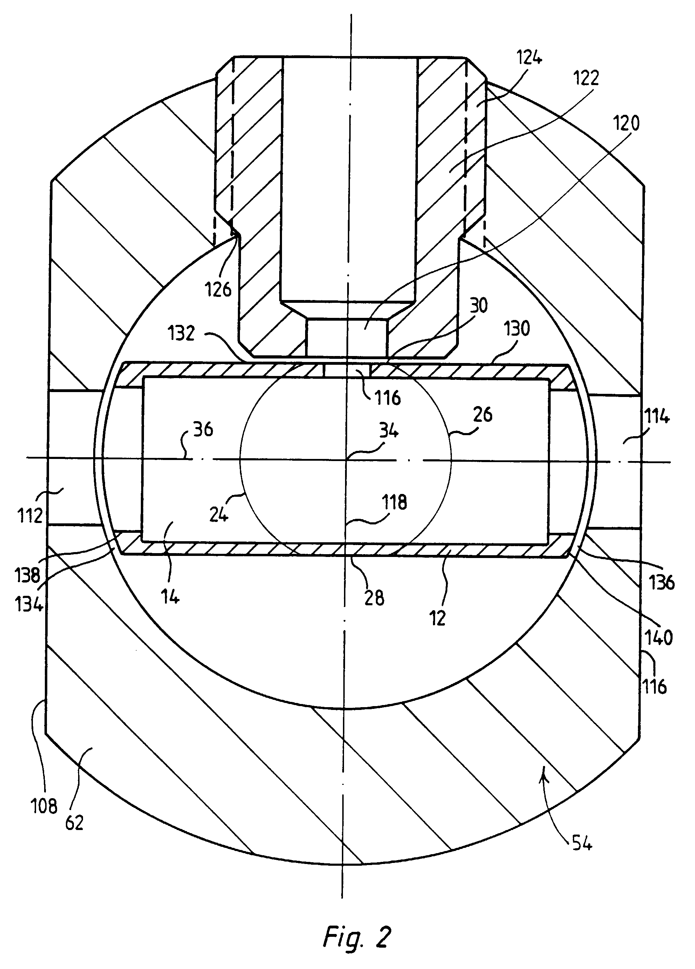

Mit 10 ist ein Ofen zur elektrothermischen Atomisierung einer Probe für spektroskopische Zwecke, insbesondere für die Atomabsorptions - Spektroskopie, bezeichnet. Der Ofen 10 besteht aus Graphit. Der Ofen 10 weist einen im wesentlichen rohrförmigen Ofenkörper 12 mit einer durchgehenden Bohrung 14 auf. Längs des Ofenkörpers 12 erstrecken sich auf gegenüberliegenden Seiten Kontaktrippen 16 und 18. Die Kontaktrippen sind in Draufsicht von oben in Fig.1 gesehen trapezförmig, wobei die längere Parallelseite des Trapezes an den Ofenkörper 12 anschließt. An den Kontaktrippen 16 und 18 sitzen Kontaktstücke 20 bzw. 22. Die Kontaktstücke 20 und 22 haben zylindrische Grundform mit gegenüberliegenden zylindrischen Mantelflächenteilen 24 und 26 (Fig.2) und gegenüberliegenden, parallelen Abflachungen 28 und 30. Die Achsen 32 und 34 der Kontaktstücke 20 bzw. 22 verlaufen senkrecht zu der Achse 36 der Bohrung 14. Im Bereich der zylindrischen Mantelflächen 24,26 sind an den Enden der Kontaktstücke 20 und 22 konische Fasen als Kontaktflächen 38 bzw. 40 vorgesehen. Wie in Fig.1 gestrichelt dargestellt ist, sind in den Kontaktstücken 20 und 22 axiale Schutzgaskanäle 42 bzw. 44 vorgesehen. Die Schutzgaskanäle 42 und 44 schneiden Vertiefungen 46,48 bzw. 50,52 an, die längs des Ofenkörpers 12 auf der Oberseite und auf der Unterseite der Kontaktrippen 16 bzw. 18 vorgesehen sind.

Der Ofen 10 ist im wesentlichen so aufgebaut wie der Ofen gemäß Fig.4 bis 6 der (nicht vorveröffentlichten) deutschen Patentanmeldung P 38 02 968.5.

Der Ofen 10 ist zwischen einem ersten Kontakt 54 und einem zweiten Kontakt 56 gehalten. Über die Kontakte 54 und 56 wird ein Strom durch den Ofen 10 geleitet. Die Kontakte 54 und 56 bilden weiterhin einen Hohlraum 58, der den Ofen 10 aufnimmt. Die Kontakte 54 und 56 bestehen ebenfalls aus Graphit.

Der erste Kontakt 54 weist einen Schaft 60 und einen Kopf 62 auf. Mit dem Schaft 60 ist der Kontakt 54 in einer Kühlvorrichtung 64 gehaltert. Der Kontakt 54 weist eine zentrale Vertiefung 66 auf, die von der Stirnfläche 68 des Kopfes 62 ausgeht. Diese Vertiefung 66 enthält einen flach-zylindrischen Abschnitt 70. An den Abschnitt 70 schließt sich eine konische Schulter 72 an. Anschließend an die Schulter 72 ist ein zylindrischer Abschnitt 74 gebildet. Der Abschnitt 74 steht mit einem konischen Abschnitt 76 in Verbindung. In dem konischen Abschnitt 76 mündet ein längs des Schaftes 60 verlaufender Schutzgaszufuhrkanal 78.

Der zweite Kontakt 56 weist ebenfalls einen Schaft 80 und einen Kopf 82 auf. Der Schaft 80 sitzt in einer Kühlvorrichtung 84. Der Kopf 82 ist in axialer Richtung relativ kurz. Der Außendurchmesser des Kopfes 82 ist geringer als der Innendurchmesser des Abschnitts 70 der Vertiefung 66 im Kontakt 54. Der Kopf 82 des Kontaktes 56 ragt in den Abschnitt 70 der Vertiefung 66 des Kontaktes 54 hinein. Zwischen der Wandung des Abschnitts 70 und der Mantelfläche 86 des Kopfes 82 ist ein ziemlich breiter Spalt 88 gebildet. In der Stirnfläche 90 des Kopfes 82 ist eine konische Vertiefung 92 gebildet. In dieser Vertiefung mündet ein Schutzgaszufuhrkanal 94, der zentral längs des Schaftes 80 verläuft.

Der konische Abschnitt 76 der Vertiefung 66 bildet eine konische Kontaktfläche 96 an dem ersten Kontakt 54. Die konische Vertiefung 92 bildet eine konische Kontaktfläche 98 an dem zweiten Kontakt 56. Zwischen diesen beiden konischen Kontaktflächen 96 und 98 ist der Ofen 10 mit seinen dazu komplementären, konischen Kontaktflächen 38 und 40 gehalten. Die Halterung erfolgt wegen der Abflachungen 28,30 vor und hinter der Papierebene von Fig.1. Zwischen den Kontaktflächen 96 und 98 und den Abflachungen 28 und 30 sind Schutzgaseinlässe 100,102 bzw. 104,106 gebildet. Über die Schutzgaseilnlässe 100, 102, 104 und 106 tritt Schutzgas aus den Schutzgaszufuhrkanälen 78 und 94 in den Hohlraum 58. Weiteres Schutzgas strömt durch die Schutzgaskanäle 40 und 42 und die von diesen Schutzgaskanälen angeschnittenen Vertiefungen 46,48,50 und 52 in den Hohlraum 58.

Wie am besten aus Fig.2 ersichtlich ist, weist der Kopf 62 des Kontaktes 54 parallele Abflachungen 108 und 110 auf. Im Bereich dieser Abflachungen 108 und 110 sind fluchtende Durchbrüche 112 bzw. 114 vorgesehen, welche in dem zylindrischen Abschnitt 74 der Vertiefung 66 münden. Im Betrieb fluchten diese Durchbrüche 112 und 114 mit der Bohrung 14 des Ofenkörpers 12. Ein Meßlichtbündel kann dann längs der Achse 36 der Bohrung 14 des Ofenkörpers 12 durch den Durchbruch 112, die Bohrung 14 und den Durchbruch 114 hindurchtreten. Im Atomabsorptions - Spektralphotometer sind die Durchbrüche 112 und 114 in hier nicht dargestellter Weise durch Fenster gegen die Atmosphäre abgeschlossen.

Der Ofenkörper 12 weist in der Mitte eine seitliche Probeneingabeöffnung 116 auf. Im Betrieb ist die Achse 118 der Probeneingabeöffnung 116 parallel zu den Abflachungen 108 und 110 und senkrecht zu den Achsen 34 und 36. Fluchtend mit der Probeneingabeöffnung 116 des Ofenkörpers 12 ist eine Probeneingabeöffnung 120 des Kontaktes 54. Die Probeneingabeöffnung 120 des Kontaktes 54 ist von einem Kamin 122 gebildet. Der Kamin 122 ist mittels eines Außengewindes 124 axial verstellbar in einer Gewindebohrung 126 des Kontaktes 54 geführt. Eine exzentrische Sacklochbohrung 128 in der äußeren Stirnfläche des Kamins 122 gestttet den Angriff eines geeigneten Werkzeugs und ermöglicht es, den Kamin 122 zu verdrehen und damit axial zu verstellen. Der Ofen 10 bildet eine plane Fläche 130. Die Abflachung 30 stellt einen Teil dieser planen Fläche dar. Zwischen der inneren Stirnfläche des Kamins 122 und der planen Fläche 130 ist ein Ringspalt 132 gebildet. Die Breite dieses Ringspaltes 132 kann durch Verstellen des Kamins 122 eingestellt werden.

Ringspalte 134 und 136 (Fig.2) sind zwischen den zylindrisch ausgebildeten Stirnflächen 138 und 140 des Ofenkörpers 12 und der Innenwandung des Abschnitts 74 der Vertiefung 66 gebildet.

Der Hohlraum 58 ist durch eine Dichtung 142 abgeschlossen, welche sich über den Spalt 88 zwischen den Kontakten 54 und 56 erstreckt. Die Dichtung 142 ist eine Ringscheibe aus einem Keramikfilz ("ceramic fiber reinforced alumina composition" Type 100, Al₂O₃/SiO₂). Die Dichtung 142 sitzt auf der Mantelfläche 86 des Kopfes 82 des Kontaktes 56 und stützt sich an der zugehörigen Kühlvorrichtung 84 ab. Im geschlossenen Betriebszustand liegt die Dichtung an der Stirnfläche 68 des Kopfes 62 des Kontaktes 54 an. Die Dichtung ist so in Kontakt mit der Kühlvorrichtung 84 und mit den gekühlten Kontakten 54 und 56. Sie ist durch die Kontakte 54 und 56 weitgehend gegen die Wärmestrahlung von dem bei der Atomisierung glühenden Ofenkörper 12 abgeschattet. Es hat sich gezeigt, daß unter diesen Umständen die Dichtung 142 durch die Aufheizung des Ofenkörpers 12 nicht beeinträchtigt wird. Die Dichtung 142 schließt den Spalt 88 hinreichend dicht ab, so daß praktisch kein Schutzgasstrom durch den Spalt 88 hindurchtritt. Sie bewirkt andererseits eine elektrische Isolation der beiden Kontakte 54 und 56 gegeneinander. Die Elastizität des Keramikfilzes nimmt die thermische Ausdehnung der Teile auf. Durch die Dichtung 142 wird gleichzeitig sichergestellt, daß bei einem Bruch des Ofens 10 die Kontakte 54 und 56 nicht in Kontakt miteinander gebracht werden und einen Kurzschluß hervorrufen können.

Bei der beschriebenen Anordnung strömt das Schutzgas von den Schutzgaseinlässen 100, 102, 104 und 106 einwärts zu dem Ofenkörper 12. Teilströme fließen dann über die Außenseite des Ofenkörpers 12 durch die Ringspalte 134 und 136 und von dort einwärts längs der Bohrung 14 zu der Probeneingabeöffnung 116. Dieses Schutzgas tritt dann durch die Probeneingabeöffnung 116 und den Kamin 122 aus. Der Schutzgasstrom führt dabei auch thermische Zersetzungsprodukte der Probe auf diesem Wege ab. Ein weiterer Teilstrom von Schutzgas fließt, wie in Fig.2 durch Pfeile angedeutet ist, durch den Ringspalt 132 unmittelbar zu dem Kamin 122. Das Verhältnis der verschiedenen Teilströme kann durch Höhenjustage des Kamins 122, also durch Einstellung der Breite des Ringspaltes 132, eingestellt werden.

Es tritt keine Strömung durch den Spalt 88 hindurch auf. Da der Spalt 88 ziemlich breit sein muß, um eine sichere elektrische Isolation zwischen den Kontakten 54 und 56 zu gewährleisten, fließt bei bekannten Anordnungen der vorliegenden Art ohne Dichtung 142 ein erheblicher Schutzgasstrom durch diesen Spalt 88. Ein solcher Schutzgasstrom wäre ohne die Dichtung 142 auch erforderlich, um das Eindringen von Luftsauerstoff sicher zu verhindern. Durch die Dichtung 142 wird dieser Schutzgasstrom vermieden. Es ergibt sich somit eine Einsparung an Schutzgas. Außerdem würde ein solcher starker Schutzgasstrom durch den Spalt 88 hindurch die Schutzgasströmung innerhalb des Hohlraumes 58 erheblich stören. Durch die Abdichtung des Spaltes 88 mittels der Dichtung 142 ergibt sich innerhalb des Hohlraumes 58 ein definierter Strömungsverlauf, wie vorstehend beschrieben.

Zur Atomisierung der Probe wird der Ofenteil 12 auf eine sehr hohe Temperatur von z.B. mehr als 1000°C aufgeheizt. In der Bohrung 14 wird dann die durch die Probeneingabeöffnungen 120 und 116 eingebrachte Probe atomisiert. Es bildet sich in der Bohrung 14 ein Atomdampf, in welchem die Bestandteile der Probe in atomarer Form vorliegen. Ein durch diesen Atomdampf längs der Achse 36 hindurchtretendes Meßlichtbündel, welches von einer Lichtquelle ausgeht, die spezifisch die Resonanzlinien eines gesuchten Elements emittiert, wird dann absorbiert nach Maßgabe des Anteils dieses gesuchten Elements in der Probe.

Während dieses Vorganges wird die Schutzgaszufuhr kurzzeitig unterbrochen. Es soll dadurch sichergestellt werden, daß der Atomdampf für die Messung möglichst lange im Strahlengang des Meßlichtbündels verbleibt und nicht sofort von dem Schutzgasstrom aus der Bohrung herausgespült wird. Durch die Aufheizung des Ofenteils 12 wird aber auch das Schutzgasvolumen in dem Hohlraum einschließlich der Bohrung stark erwärmt und erhöht sein Volumen auf ein Vielfaches. Schon aufgrund dieser Erwärmung tritt somit eine Schutzgasströmung auf. Ohne die Dichtung würde diese erwärmungsbedingte Schutzgasströmung überwiegend durch den Spalt 88 austreten. Dabei würden sich sehr unübersichtliche Strömungsverhältnisse ergeben. Das könnte dazu führen, daß Probendampf zu relativ kalten Teilen transportiert wird und dort kondensiert.

Es ist hier ein Ofen zur Verwendung bei der Atomabsorptions - Spektroskopie beschrieben worden. Die Erfindung ist jedoch auch bei anderen Verfahren anwendbar, bei denen eine Atomisierung von Proben für spektroskopische Zwecke stattfindet, beispielsweise bei Verfahren, bei denen eine Atomisierung in einer Edelgasatmosphäre stattfindet und eine Gasentladung erzeugt wird, welche eine gleichzeitige Beobachtung der Emissionslinien mehrerer in der Probe vorhandener Elemente gestattet.

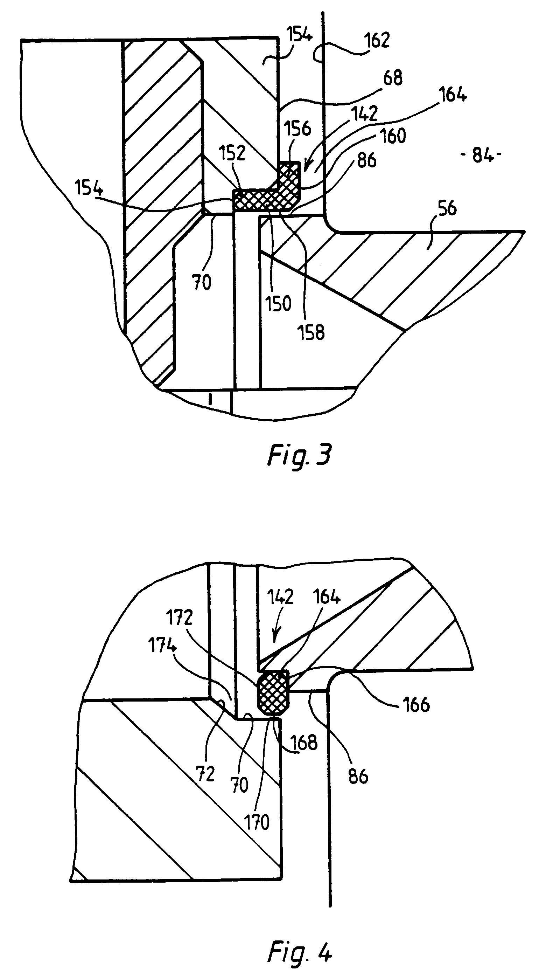

Bei der Ausführung nach Fig.3 ist ein als Dichtung 142 ein Keramikring 150 vorgesehen, der in den Kontakt 54 eingesetzt ist. Der Keramikring 150 hat im wesentlichen L-förmigen Querschnitt und enthält einen hülsenförmigen Teil 152, der in eine Ausnehmung 154 auf der Innenfläche 70 der Vertiefung 66 eingesetzt ist, und einen vor der Stirnfläche 68 des Kontaktes 54 nach außen sich erstreckenden Ringscheibenteil 156. Der hülsenförmige Teil 152 des Keramikringes 150 bildet mit der Mantelfläche 86 des Kontaktes 56 einen definierten, engen Spalt 158 von beispielsweise 0,075 mm. Durch diesen Spalt 158 kann ein geringer Schutzgasstrom fließen, der etwa dem Schutzgasstrom entsprechen dürfte, der auch durch eine Dichtung aus Keramikfilz hindurchtritt. Dieser Schutzgasstrom ist aber vernachlässigbar. Der Schutzgasstrom ist wesentlich geringer als der Schutzgasstrom, der ohne die Dichtung durch den Spalt 88 zwischen den Kontakten (Fig.1) hindurchtreten würde. Da dieser Spalt 158 auf einer Seite von einem isolierenden Keramikteil, nämlich dem Keramikring 150 begrenzt ist, kann der Spalt 158 sehr klein gemacht werden, ohne daß die Gefahr einer Berührung der Kontakte 45 und 56 und damit eines Kurzschlusses besteht. Da der Spalt 158 ein Umfangsspalt ist, ändert er sich praktisch nicht, wenn sich die Kontakte 54 und 56 beim Aufheizen des Ofens erwärmen und thermisch ausdehnen.

Die Stirnfläche 160 des Ringscheibenteils 156 liegt in einem solchen Abstand von der gegenüberliegenden Stirnfläche 162 der Kühlvorrichtung 84, daß der dazwischen gebildete Spalt 164 die thermische Ausdehnung der Kontakte 54 und 56 aufzunehmen vermag. Der isolierende Ringscheibenteil 156 gewährleistet, daß auch bei dieser thermischen Ausdehnung kein unmittelbarer Kontakt zwischen den Stirnflächen 68 und 162 des Kontaktes 54 bzw. der Kühlvorrichtung 84 hergestellt werden kann. Der Ringscheibenteil 156 wirkt somit ebenfalls als Kurzschlußsicherung.

Bei der Ausführung nach Fig.4 ist als Dichtung 142 ein Keramikring 164 von im wesentlichen quadratischem oder rechteckigem Querschnitt in eine Ausnehmung 166 des Kontaktes 56 eingesetzt. Die zylindrische Mantelfläche 168 des Keramikringes 164 bildet mit dem zylindrischen Abschnitt 70 der Vertiefung 66 des Kontaktes 54 einen engen Spalt 170. Dieser Spalt ist wieder wesentlich enger als der Spalt 88 (Fig.1) zwischen den Kontakten selbst. Das wird auch hier durch die isolierenden Eigenschaften des Keramikringes 164 ermöglicht. Die Stirnfläche 172 des Keramikringes 164 ist im kalten Zustand der Kontakte in einem solchen Abstand von der Ringschulter 72 angeordnet, daß der dazwischen gebildete Spalt 174 die thermische Ausdehnung der Kontakte 54 und 56 aufzunehmen vermag. Auch in axialer Richtung bildet der Keramikring 164 einen Kurzschlußschutz, da bei der thermischen Ausdehnung oder durch Lagetoleranzen allenfalls der isolierende Keramikring 164 an der Ringschulter 72 zur Anlage kommen könnte.

## Patentansprüche

1. Vorrichtung zur elektrothermischen Atomisierung einer Probe für spektroskopische Zwecke, insbesondere für die Atomaborptions-Spektroskopie, enthaltend
(a) einen Ofen (10)
- mit einem im wesentlichen rohrförmigen Ofenkörper (12)
- mit seitlichen Kontaktstücken (20, 22) mit Kontaktflächen (38, 40), wobei die Kontaktstücke an dem Ofenkörper so angebracht sind, daß ein elektrischer Strom zum Aufheizen des Ofens (10) durch den Ofen (10) hindurchleitbar ist, und
- mit einer den Durchtritt eines Meßlichtbündels gestattenden Bohrung (14) in dem Ofenkörper (12),
(b) ein Paar von elektrischen Kontakten (54, 56),
- zwischen denen der Ofen (10) mit seinen Kontaktflächen (38, 40) gehalten ist,
- über die der besagte elektrische Strom zuführbar ist und
- die unter Bildung eines Spaltes (88) um den Ofen (10) herumgreifen und einen den Ofen (10) enthaltenden Hohlraum (58) bilden, wobei der zwischen den Kontakten (54, 56) gebildete Spalt (88) durch eine elektrisch isolierende Dichtung (142) abgeschlossen ist,
(c) miteinander und mit der Bohrung (14) des Ofens (10) fluchtende Öffnungen (112, 114) in den Kontakten (54, 56), und
(d) Mittel zur Führung eines Schutzgasstromes über Innen- und Außenfläche des Ofens (10)
**dadurch gekennzeichnet**, daß
(e) fluchtende Probeeingabeöffnungen (116, 120) in dem Ofen (10) und in einem der Kontakte (54) zum Eingeben von Probe in die Bohrung (14) des Ofens vorgesehen sind,
(f) die Öffnungen (112, 114) durch Fenster abgeschlossen sind, welche einen Durchtritt des Meßlichtbündels gestatten,
(g) der Strom zur Aufheizung des Ofens (10) im wesentlichen quer zur Achse (36) der vom Meßlichtbündel durchsetzten Bohrung (14) durch den Ofen (10) hindurchleitbar ist,
(h) die Stirnflächen (138, 140) des rohrförmigen Ofenkörpers (12) mit der Innenwandung des von den Kontakten (54, 56) gebildeten Hohlraums (58) Spalte (134, 136) bilden, und
(i) die Mittel zur Führung des Schutzgasstromes Schutzgaseinlässe (100, 102, 104, 106) im Bereich der Kontaktstücke (20, 22) aufweisen, so daß das Schutzgas längs der Kontaktstücke (20, 22), um den rohrförmigen Ofenkörper (12) herum und durch die Spalte (134, 136) hindurch von den Enden her in die Bohrung (14) des Ofenkörpers (12) strömt, aus welcher es über die fluchtenden Probeeingabeöffnungen (116, 120) austritt, so daß der Zutritt von Luftsauerstoff zu dem Ofen (10) verhindert und die Probenbestandteile abgeführt werden.

2. Vorrichtung nach Anspruch 1, **dadurch gekennzeichnet**, daß die Kontakte (54, 56) in Kühlvorrichtungen (64, 84) gehaltert sind.

3. Vorrichtung nach Anspruch 2, **dadurch gekennzeichnet**, daß die Dichtung (142) von den gekühlten Kontakten (54, 56) gegenüber dem Ofen (10) im wesentlichen abgeschattet ist.

4. Vorrichtung nach Anspruch 3, **dadurch gekennzeichnet**, daß die Dichtung (142) von einem Keramikfilz gebildet ist.

5. Vorrichtung nach einem der Ansprüche 1-3, **dadurch gekennzeichnet**, daß die Dichtung von einem Keramikring gebildet ist, der an einem der Kontakte sitzt und mit dem anderen Kontakt einen engen Spalt bildet.

6. Vorrichtung nach Anspruch 5, **dadurch gekennzeichnet**, daß der enge Spalt zwischen einer Mantelfläche des Keramikrings und einem zylindrischen Innenwandungsteil des besagten anderen Kontaktes gebildet ist.

7. Vorrichtung nach Anspruch 6, **dadurch gekennzeichnet**, daß der Keramikring im kalten Zustand des Ofens mit seiner Stirnfläche in einem Abstand von einer gegenüberliegenden Stirnfläche angeordnet ist, der die bei der Erwärmung des Ofens auftretende Längsausdehnung der Kontakte aufnimmt.

8. Vorrichtung nach Anspruch 7, **dadurch gekennzeichnet,** daß der Keramikring (150) L-förmigen Querschnitt besitzt und einen hülsenförmigen Teil (152) aufweist, der in einer Ausnehmung (154) einer Innenfläche (70) einer Vertiefung (66) des einen Kontaktes (54) gehalten ist, und einen sich über die Stirnfläche (68) dieses Kontaktes (54) erstreckenden Ringscheibenteil (156), wobei ein enger Spalt (158) in Umfangsrichtung zwischen der Innenfläche des hülsenförmigen Teils (152) und einer Mantelfläche (86) des in die Vertiefung (66) des besagten einen Kontaktes (54) hineinragenden anderen Kontaktes (56) gebildet ist, und wobei die Stirnfläche (160) des Ringscheibenteils (156) im Abstand von einer gegenüberliegenden, mit dem anderen Kontakt (56) in leitender Verbindung stehenden Stirnfläche (162) angeordnet ist.

9. Vorrichtung nach Anspruch 7, **dadurch gekennzeichnet**, daß
(a) der Keramikring in einem Kontakt (56) gehaltert ist, der von dem anderen Kontakt (54) mit einer Vertiefung (66) umgriffen wird, und mit seiner Mantelfläche (168) über die Mantelfläche (86) des Kontaktes (56) hinausragt, und
(b) die Mantelfläche (168) mit einem zylindrischen Abschnitt (70) der Vertiefung (66) einen engen Spalt (170) in Umfangsrichtung bildet.

10. Vorrichtung nach einem der vorangegangenen Ansprüche, **dadurch gekennzeichnet**, daß
(a) die Kontaktstücke (20, 22) des Ofens (10) zylindrische Grundform mit gegenüberliegenden Abflachungen (28, 30) besitzen und an ihren Enden im Bereich der zylindrischen Mantelflächen (24, 26) zur Bildung der Kontaktflächen (38, 40) konisch angefast sind,
(b) die Kontakte (54, 56) konkav-konische Kontaktflächen (96, 98) komplementär zu den Kontaktflächen (38, 40) des Ofens (10) aufweisen,
(c) die Kontaktflächen (96, 98) der Kontakte (54, 56) je einen Schutzgaskanal (78, 94) umgeben, über den Schutzgas zuführbar ist, wobei zwischen den Kontaktflächen (96, 98) der Kontakte (54, 56) und den Abflachungen (28, 30) der Kontaktstücke (20, 22) des Ofens (10) die besagten Schutzgaseinlässe (100, 102, 104, 106) gebildet sind.

11. Vorrichtung nach Anspruch 10, **dadurch gekennzeichnet**, daß die in dem einen Kontakt (54) vorgesehene Probeeingabeöffnung (120) von der Bohrung eines in den Kontakt (54) eingesetzten Kamins (122) gebildet ist, dessen Stirnfläche mit einer planen Oberfläche (130) des Ofens (10) einen Ringspalt (132) bildet.

12. Vorrichtung nach Anspruch 11, **dadurch gekennzeichnet**, daß der Kamin (122) mit einem Außengewinde (124) in eine Gewindebohrung (126) des Kontaktes (54) eingeschraubt und durch Verdrehen höhenverstellbar ist.

## Claims

1. Apparatus for electrothermic atomisation of a sample for spectroscopic purposes, more particularly for atomic absorption spectroscopy, containing
(a) a furnace (10) comprising
- a substantially tubular furnace body (12),
- lateral contact members (20, 22) with contact surfaces (38, 40), the contact members being attached to the furnace body so as to convey a heating electric current through the furnace (10), and
- a bore (14) through the furnace body (12) and enabling a measuring light beam to travel through,
(b) a pair of electric contacts (54, 56)
- between which the contact surfaces (38, 40) of the furnace (10) are held,
- through which the said electric current can be supplied and
- which extend around the furnace (10) so as to form a gap (88) and a cavity (58) containing the furnace (10), the gap (88) formed between the contacts (54, 56) being closed by an electrically insulating seal (142),
(c) openings (112, 114) in the contacts (54, 56) in line with one another and with the bore (14) in the furnace (10), and
(d) means for supplying a stream of protective gas over the inner and outer surface of the furnace (10),
characterised in that
(e) aligned openings (116, 120) are formed in the furnace (10) and in one of the contacts (54) for inputting samples into the furnace bore (14),
(f) the openings (112, 114) are closed by windows through which the measuring light beam can pass,
(g) the current for heating the furnace (10) is adapted to be conveyed through the furnace (10) substantially at right angles to the axis (36) of the bore (14) through which the measuring light beam travels,
(h) the end faces (138, 140) of the tubular furnace body (12) form gaps (134, 136) in co-operation with the inner wall of the cavity (58) formed by the contacts (54, 56), and
(i) the means for supplying the stream of protective gas has inlets (100, 102, 104, 106) in the region of the contact members (20, 22), so that the protective gas flows along the contact members (20, 22) around the tubular furnace body (12) and through the gaps (134, 136) from the ends into the bore (14) in the furnace body (12), from which it comes out through the aligned openings (116, 120), so that atmospheric oxygen is prevented from entering the furnace (10) and the constituents of the sample are removed.

2. Apparatus according to claim 1, characterised in that the contacts (54, 56) are mounted in cooling devices (64, 84).

3. Apparatus according to claim 2, characterised in that the seal (142) is substantially shaded from the furnace (10) by the cooled contacts (54, 56).

4. Apparatus according to claim 3, characterised in that the seal (142) is formed by a ceramic felt.

5. Apparatus according to any of claims 1 - 3, characterised in that the seal is formed by a ceramic ring which is disposed on one of the contacts and co-operates with the other contact to form a narrow gap.

6. Apparatus according to claim 5, characterised in that the narrow gap is formed between a surface of the ceramic ring and a cylindrical inner wall part of the said other contact.

7. Apparatus according to claim 6, characterised in that when the furnace is cold, the end face of the ceramic ring is disposed at a distance from an opposite end face so as to take up the longitudinal expansion of the contacts when the furnace is heated.

8. Apparatus according to claim 7, characterised in that the ceramic ring (150) has an L-shaped cross-section and a sleeve-like part (152) which is held in a cavity (154) in an inner surface (70) of a recess (66) in one contact (54) and has an annular disc part (156) extending over the end face (68) of the contact (54), a narrow gap (158) being formed in the peripheral direction between the inner surface of the sleeve-like part (152) and a surface (86) of the other contact (56) projecting into the recess (66) in the said one contact (54), and the end face (160) of the annular disc part (156) is disposed at a distance from an opposite end face (162) conductively connected to the other contact (56).

9. Apparatus according to claim 7, characterised in that
(a) the ceramic ring is mounted in a contact (56) surrounded by the other contact (54) with a recess (66), and its surface (168) projects beyond the surface (86) of the contact (56), and
(b) the surface (168) co-operates with a cylindrical portion (70) of the recess (66) to form a narrow gap (170) in the peripheral direction.

10. Apparatus according to any of the preceding claims, characterised in that
(a) the contact members (20, 22) of the furnace (10) have a basically cylindrical shape with opposite flat parts (28, 30) and their ends are conically chamfered in the region of the cylindrical surfaces (24, 26) to form the contact surfaces (38, 40),
(b) the contacts (54, 56) have concave-conical contact surfaces (96, 98) complementary with the contact surfaces (38, 40) of the furnace (10), and
(c) the surfaces (96, 98) of the contacts (54, 56) each surround a duct (78, 94) for supplying protective gas, and the said protective-gas inlets (100, 102, 104, 106) are formed between the surfaces (96, 98) of the contacts (54, 56) and the flat parts (28, 30) of the contact members (20, 22) of the furnace (10).

11. Apparatus according to claim 10, characterised in that the sample-insertion opening (120) provided in one contact (54) is formed by the bore of a chimney (122) inserted in the contact (54), the end face of the chimney co-operating with a flat surface (130) of the furnace (10) to form an annular gap (132).

12. Apparatus according to claim 11, characterised in that an outer thread (124) of the chimney (122) is screwed into a threaded bore (126) of the contact (54) and can be vertically adjusted by rotation.

## Revendications

1. Dispositif pour l'atomisation électrothermique d'un échantillon à des fins spectroscopiques, en particulier pour la spectroscopie par absorption atomique, comportant :
(a) un four (10)
- comprenant un corps de four (12) pour l'essentiel tubulaire,
- comprenant des pièces de contact latérales (20, 22) pourvues de surfaces de contact (38, 40), les pièces de contact étant montées sur le corps du four d'une manière telle qu'un courant électrique puisse être amené à passer à travers le four (10) afin de chauffer le four (10), et :
- comprenant un perçage (14) qui est ménagé dans le corps (12) du four et qui autorise le passage d'un faisceau lumineux de mesure,
(b) une paire de contacts électriques (54, 56),
- entre lesquels le four (10) est maintenu par ses surfaces de contact (38, 40),
- par l'intermédiaire desquels ledit courant électrique peut être amené, et :
- qui entourent le four (10) en formant un interstice (88) et qui forment une cavité (58) contenant le four (10), cependant que l'interstice (88) formé entre les contacts (54, 56) est fermé par un joint d'étanchéité électriquement isolant (142),
(c) des ouvertures (112, 114) qui sont ménagées dans les contacts (54, 56) et qui sont alignées entre elles et sur le perçage (14) du four (10), et :
(d) des moyens pour guider un courant de gaz protecteur sur les surfaces intérieure et extérieure du four (10),
caractérisé par le fait que :
(e) il est prévu des ouvertures alignées d'introduction de l'échantillon (116, 120) qui sont ménagées dans le four (10) et dans l'un des contacts (54) pour introduire l'échantillon dans le perçage (14) du four,
(f) les ouvertures (112, 114) sont fermées par des fenêtres qui permettent le passage du faisceau lumineux de mesure,
(g) le courant de chauffage du four (10) peut être amené à traverser le four (10) d'une manière pour l'essentiel transversale par rapport à l'axe (36) du perçage (14) qui est traversé par le faisceau lumineux de mesure,
(h) les surfaces frontales (138, 140) du corps tubulaire (12) du four forment des interstices (134, 136) avec la paroi intérieure de la cavité (58) qui est formée par les contacts (54, 56), et :
(i) les moyens pour guider le courant de gaz protecteur présentent des entrées de gaz protecteur (100, 102, 104, 106) dans la région des pièces de contact (20, 22), de sorte que le gaz protecteur s'écoule depuis les extrémités le long des pièces de contact (20, 22), autour du corps tubulaire (12) du four et à travers les interstices (134, 136) jusque dans le perçage (14) du corps (12) du four depuis lequel il sort par l'intermédiaire des ouvertures alignées d'introduction de l'échantillon (116, 120), de sorte que l'accès de l'oxygène de l'air au four (10) est empêché et que les constituants de l'échantillon sont évacués.

2. Dispositif selon la revendication 1, caractérisé par le fait que les contacts (54, 56) sont maintenus dans des dispositifs de refroidissement (64, 84).

3. Dispositif selon la revendication 2, caractérisé par le fait que le joint d'étanchéité (142) est pour l'essentiel dans l'ombre des contacts refroidis (54, 56) par rapport au four (10).

4. Dispositif selon la revendication 3, caractérisé par le fait que le joint d'étanchéité (142) est constitué par un feutre céramique.

5. Dispositif selon l'une des revendications 1 à 3, caractérisé par le fait que le joint d'étanchéité est constitué par une bague en céramique qui porte sur l'un des contacts et qui forme un interstice étroit avec l'autre contact.

6. Dispositif selon la revendication 5, caractérisé par le fait que l'interstice étroit est formé entre une surface latérale de la bague en céramique et une partie de paroi intérieure cylindrique dudit autre contact.

7. Dispositif selon la revendication 6, caractérisé par le fait que dans l'état froid du four, la bague en céramique est disposée par sa surface frontale, par rapport à une surface frontale opposée, à une distance permettant la dilatation longitudinale des contacts qui intervient lors du chauffage du four.

8. Dispositif selon la revendication 7, caractérisé par le fait que la bague en céramique (150) présente une section transversale en forme de L, et qu'elle comporte une partie (152) en forme de manchon qui est maintenue dans un évidement (154) d'une surface intérieure (70) d'un renfoncement (66) de l'un (54) des contacts, et une partie (156) en forme de disque annulaire qui s'étend sur la surface frontale (68) de ce contact (54), cependant qu'un interstice étroit (158) est formé dans la direction du pourtour entre la surface intérieure de la partie (152) en forme de manchon et une surface latérale (86) de l'autre contact (56) qui fait saillie dans le renfoncement (66) dudit premier contact (54), et que la surface frontale (160) de la partie (156) en forme de disque annulaire est disposée à distance d'une surface frontale opposée (162) qui est reliée à l'autre contact (56) d'une manière conductrice.

9. Dispositif selon la revendication 7, caractérisé par le fait que :
(a) la bague en céramique est maintenue dans un contact (56) qui est entouré par l'autre contact (54) par un renfoncement (66), et elle fait saillie par sa surface latérale (168) au-delà de la surface latérale (86) du contact (56), et :
(b) la surface latérale (168) forme un interstice étroit (170) dans la direction du pourtour avec une partie cylindrique (70) du renfoncement (66).

10. Dispositif selon l'une des revendications précédentes, caractérisé par le fait que :
(a) les pièces de contact (20, 22) du four (10) présentent une forme de base cylindrique pourvue de méplats opposés (28, 30), et qu'elles sont chanfreinées en cône à leurs extrémités dans la région des surfaces latérales cylindriques (24, 26) pour former les surfaces de contact (38, 40),
(b) les contacts (54, 56) présentent des surfaces de contact coniques et concaves (96, 98) qui sont complémentaires des surfaces de contact (38, 40) du four (10),
(c) les surfaces de contact (96, 98) des contacts (54, 56) entourent chacune un canal de gaz protecteur (78, 94) par l'intermédiaire duquel du gaz protecteur peut être amené, cependant que lesdites entrées de gaz protecteur (100, 102, 104, 106) sont formées entre les surfaces de contact (96, 98) des contacts (54, 56) et les méplats (28, 30) des pièces de contact (20, 22) du four (10).

11. Dispositif selon la revendication 10, caractérisé par le fait que l'ouverture d'introduction de l'échantillon (120) prévue dans l'un (54) des contacts est formée par le perçage d'une cheminée (122) qui est insérée dans le contact (54) et dont la surface frontale forme un interstice annulaire (132) avec une surface plane (130) du four (10).

12. Dispositif selon la revendication 11, caractérisé par le fait que la cheminée (122) est vissée par un filetage extérieur (124) dans un perçage fileté (126) du contact (54), et qu'elle est réglable en hauteur par rotation.
